# EUROPEAN PATENT APPLICATION

(11) **EP 3 758 316 A1**
(43) Date of publication of application: **30.12.2020**
(21) Application number: 20165325.0
(22) Date of filing: 24.03.2020
(51) Int. Cl.: H04L 12/801, H04L 12/851, H04L 12/825, H04L 12/861

(54) **OUTPUT QUEUEING WITH SCALABILITY FOR SEGMENTED TRAFFIC IN A HIGH-RADIX SWITCH**

(30) Priority: 28.06.2019 US 201962868733 P; 21.08.2019 US 201916547479
(71) Applicant: Intel Corporation, Santa Clara, CA 95054 (US)
(72) Inventor: ARDITTI ILITZKY, David, Santa Clara, California 95054 (US); SOUTHWORTH, Robert, Santa Clara, California 95054 (US); GRETH, John, Santa Clara, California 95054 (US); SRINIVASAN, Arvind, Santa Clara, California 95054 (US); YOUNG, Travis J., Santa Clara, California 95054 (US); MAEDA NUNEZ, Luis Alfonso, Santa Clara, California 95054 (US); KUNZ, James, Santa Clara, California 95054 (US); JUNG, Bongjin, Santa Clara, California 95054 (US)
(74) Representative: Rummler, Felix

(57) **Abstract**

Examples describe an egress subsystem that can be used to schedule fetching and transmission of packets from a switch fabric. Segments of a packet can be requested from a switch fabric and stored in a re-order buffer to re-order any segments that are received out of order from the switch fabric. A header segment re-order buffer can be used to re-order segments of a header. After a header of a packet is available in the header segment re-order buffer, the header can be processed before the entire associated body is received from the switch fabric. A jitter threshold scheme can gate egress of a body from a re-order buffer unless a time threshold or amount threshold is met. The egress subsystem can track a state of packet segments from request to transmission, A flow control message received at the egress subsystem can cause packets in certain states to be paused and not permitted to egress.

## Description

### RELATED APPLICATION

The present application claims the benefit of priority date of U.S. provisional patent application Serial Number 62/868,733, filed June 28, 2019, the entire disclosure of which is incorporated herein by reference.

### TECHNICAL FIELD

Various examples described herein relate to managing congestion in a switch.

### BACKGROUND

In networking applications, switches are used to route packets received from a medium (e.g., wired or wireless) from an ingress port to an egress port. In switches, a radix includes a number of ports. In order to sustain scalability as required by hyperscale datacenters, switching application specific integrated circuits (ASICs) are used to continuously scale switch radix and switch bandwidth while reducing switch latency. As the radix of a switch scales, crossbars become less scalable. Crossbar complexity increases exponentially (e.g., n²), versus other topologies whose complexity is smaller. Thus, depending on the precise implementation technology (e.g. semiconductor process node), this complexity may become a feasibility constraint. Therefore, other topologies are common choices for the switch's internal fabric.

### BRIEF DESCRIPTION OF THE DRAWINGS

FIG. 1 depicts an egress sub-system in accordance with some embodiments.
FIG. 2 shows an egress sub-system in accordance with some embodiments.
FIG. 3 depicts an example packet descriptor state transitions implemented by packet replay control block in accordance with some embodiments.
FIG. 4A depicts a process to monitor status of requests provided to a switch fabric in accordance with some embodiments.
FIG. 4B depicts a process that can be used to handle flow control in accordance with some embodiments.
FIG. 4C depicts a process to egress a packet in accordance with some embodiments.
FIG. 5 depicts an example system in accordance with some embodiments.
FIG. 6 depicts a system in accordance with some embodiments.
FIG. 7 depicts an example of a data center in accordance with some embodiments.

### DETAILED DESCRIPTION

A switch ingress subsystem generally handles the reception of packets, their analysis to determine to which output port they must be forwarded, and the actual forwarding of the packet to the selected egress output port. Forwarding of packets from ingress ports to egress ports uses the switch's internal switch fabric, examples of which are mesh, crossbars, and so forth. Multiple traffic classes (TCs) or flows received at ingress ports can be forwarded via a switch (e.g., mesh fabric, direct connection, or crossbar) that connects to all egress ports. When a decision is made to transmit a packet from an egress port, packet segments are fetched from a switch fabric. Packets are fetched by segments where a segment is an atomic unit that can be transported through the switch fabric. Packet segments retrieved from the switch fabric can be buffered in output queue structures which may share the same buffer and may be shared across multiple traffic classes (TCs) (or flows) for an egress port.

Data is fetched from the switch fabric with an unpredictable packet segment retrieval latency (e.g., ∼20-100 cycles) and tail latency. Tail latency is a tail of the packet segment fetch latency probability distribution (also known as latency profile) of the switch fabric. Tail latency refers to the worst-case latencies seen at very low probability. For example, tail latency can refer to the highest fetch latency observed out of 10¹⁵ packet segment fetch operations. It is desirable to keep tail latency as low as possible.

A single network can handle packets for a wide variety of flows simultaneously. When one flow is stalled, the remaining traffic should be able to proceed unhindered. Generally, hardware must reserve some portion of all shared buffers for each flow to prevent a stalled flows from using up all the resources. Buffers used for egress output queuing structures represent a significant portion of the area of a switch, and the reserved portions of such buffers grow linearly with the number of distinct flows. For this reason, area constraints can impose limits on the number of distinct flows the network can handle at once in a non-blocking fashion.

A known solution that attempts to address overloading of buffers is to provide extra shared buffer space for the output queueing structure per each supported flow on an egress port. Output queues for distinct flows are allocated from the shared buffer separately. But this causes memory on a per-egress port basis to grow even if buffer space is shared.

Modern switches support a limited number of traffic classes (TCs) which are guaranteed not to block each other. The number of TCs usually ranges from 4 to 16, but other numbers of TCs can be supported. If the number of flows to be supported is larger than the number of TCs, then flows are grouped into TCs. Each TC usually receives a number of dedicated egress-side structures (e.g., buffers for output queuing).

Scaling the number of independent (non-blocking) flows has a direct impact in the switch egress subsystem area, due to the scale-up of the per-flow (or per-TC) dedicated resources (e.g. output data queues). To limit the area increase when supporting multiple flows, similar flows are grouped together (into a TC) and therefore all the flows sharing a TC may block each other whereby if any of the flows in the group becomes stalled/paused, all the remaining flows in the group can also become stalled due to head of line (HOL) blocking. While area may be kept bounded, latency can increase. Moreover, some number of TCs will usually be reserved for system functions, so most user flow traffic will be bundled into a very small number of TCs, which increases latency or area even further.

Various embodiments potentially and at least partially allow the egress side of a switch to scale as the number of TCs grows without growing memory on a per-egress port basis. Various embodiments potentially and at least partially address the support of a scalable number of flows in a fabric while attempting to reduce per-flow egress-side reserved resources and simultaneously minimizing switch egress latency. Various embodiments potentially and at least partially achieve reduced output data buffering and enabling high-radix scaling, while supporting flow-based flow control (FC), virtual cut through (VCT) operations, and non-blocking flows.

Various embodiments provide a shared output queue not statically allocated to any flow or TC. The shared buffer can be scalable without increasing memory while managing non-blocking of any other flow or TC. The shared buffer can enable arbitrarily many non-blocking flows or TCs without increasing memory usage. Various embodiments enable growth of the number of flows or traffic classes, allowing customers to avoid unnecessary application flow stalls, while keeping the switch hardware (e.g., memory) area bounded and latencies minimized with potentially no blocking between flows.

In a fully-connected multi-hop switch fabric, packet segments are delivered to the destination egress subsystem with unpredictable latencies, which may result in out of order arrivals. In a shared memory switch fabric, which can be considered a fully-connected multi-hop switch fabric, received packets can be stored in a central shared memory subsystem, but are not limited in this respect. The egress subsystem does not reserve buffering resources for each TC (nor for each flow), so some or all TC or flows can use the same pool of buffering resources, e.g. a single shared output queue for all TCs and flows. Moreover, the flows or TCs to which the packets occupying the shared buffering resource belong to are decided by the scheduling policy applied on the egress subsystem. Furthermore, even though all flows share the same resource, various embodiments provide for no head of line (HOL)-blocking to occur because the shared egress output queue will be flushed before any stall/pause goes into effect such that (1) either the shared output queue is guaranteed to be drainable (i.e., all packet data segments egressed through the output port within the stall/pause deadlines) or (2) if the shared egress output queue is not guaranteed to be drainable under certain conditions, then in such conditions, if the HOL-packet corresponds to a blocked/stalled TC, then the data corresponding to the blocked TC is flushed (dropped) from the shared egress output queue and the operation is replayed (e.g., the dropped packet is fetched from the switch fabric and placed in the shared egress output queue at least one more time) when the TC becomes unblocked.

Given that fully-connected multi-hop switch fabrics can generate out-of-order responses with unpredictable latencies, operating egress in VCT mode may result in packet underruns. Underrun is when anything less than the full packet is sent on the wire. When some amount less than the full packet but more than the minimum allowed packet size is sent, underrun still occurs. A packet underrun occurs after a packet that has started egressing does not have valid data in every intermediate beat, resulting in a truncated packet on the wire (e.g., a runt frame in Ethernet which violates the Ethernet specification).

Note that the trivial solution to packet underrun is to operate all ports in store and forward (SAF) mode, which degrades the overall switch latency, and requires a maximum transfer unit (MTU)-sized buffer per output port. An MTU is the largest packet or frame size under a standard such as Ethernet (IEEE 802.3-2018), Internet Protocol (RFC 760, RFC 791, and so forth). For SAF mode, the egress subsystem fetches the complete packet from the switch fabric into the egress local buffers before the packet is eligible to start transmission.

According to various embodiments, reduced output data buffering can be applied when operating in VCT mode. Reduced output data buffering can be achieved when there is a single shared egress output queue per output port, time division multiplexed (TDMed) across flows / traffic classes as needed (with no replication of buffers).

Various embodiments constrain the amount of memory allocated to packet queues in the egress subsystem. However, the size of the packet queues may increase to allow for a packet to be reordered and reassembled to cover worst case round trip delay through the switch fabric.

Various embodiments allow for traffic classes (TCs) to be non-blocking to avoid everything fetched behind a packet for a TC that has been paused being blocked (head of line blocking).

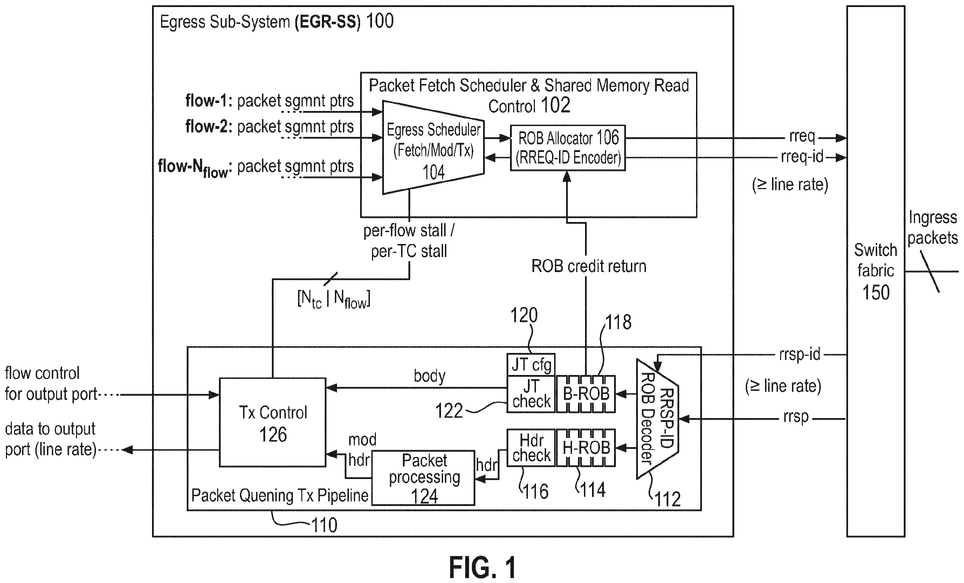

FIG. 1 depicts an egress sub-system. An egress subsystem 100 for a single output port can be scaled to multiple ports or even multi-configuration port tiles (e.g. 1x400GE, 2x200GE, 4x100GE, or other configurations). Egress subsystem 100 can receive packets from fabric 150. For example, fabric 150 can provide a fully-connected multi-hop topologies that results in unpredictable latencies and out-of-order data delivery. Examples of such topologies are: torus, butterflies, buffered multi-stage, etc. An example of switch fabric 150 is a shared memory switch fabric (SMSF), although other switch fabrics can be used. Some embodiments can use a fully-connected multi-hop switch fabric 150 implemented as a Shared Memory Switch Fabric (SMSF), e.g. a shared memory mesh, yet the embodiments apply independent of the chosen fabric.

Shared Memory Switch Fabric (SMSF) can be a memory buffer used to connect ingress ports to egress ports. SMSF can represent a switch fabric connecting ingress ports and egress ports with unpredictable delay from the time that the egress subsystem requests a packet segment fetch to the arrival time of the requested packet segment at the egress subsystem.

Switch fabric 150 can receive packets using ingress ports. Ingress ports can receive packets from a network medium compliant with any standard, including Ethernet, transmission control protocol (TCP), User Datagram Protocol (UDP), FibreChannel, InfiniBand, OmniPath, Intel QuickPath Interconnect (QPI), Intel Ultra Path Interconnect (UPI), Intel On-Chip System Fabric (IOSF), InfiniBand, Compute Express Link (CXL), HyperTransport, high-speed fabric, PCIe, NVLink, Advanced Microcontroller Bus Architecture (AMBA) interconnect, OpenCAPI, Gen-Z, CCIX, NVMe over Fabrics (NVMe-oF) (described at least in NVM Express Base Specification Revision 1.4 (2019)), and variations thereof, and so forth.

Referring next to packet fetch scheduler and shared memory read controller (PFSSMRC) component 102. PFSSMRC 102 receives per-flow delivery (up to N_{flow} concurrent pointer sequences) at least of packet segment pointers or handles from the ingress subsystems of switch 150. Flow-1 to flow-N_{flow} can represent switch fabric pointers that indicate a packet segment in switch fabric 150 is to be forwarded to an egress port for transmission to a network medium. For types of fabrics other than SMSF, flow-1 to flowN_{flow} represent packet segment handles, which refer to a packet segment as required by the specific fabric. Egress scheduler 104 decides which flow and corresponding packets to fetch from fabric 150. Once or after egress scheduler 104 schedules a packet for egress, the packet becomes committed to the wire for transmission. Thus, packets egress from an egress port in the order decided by egress scheduler 104. Egress scheduler 104 decides how to time division multiplex (TDM) the shared ReOrder Buffer (ROB) 114 and 118 across the different traffic classes (TCs) or flows. For example, best-effort and guaranteed service policies for TDM can be used. Egress scheduler 104 is configurable to allocate transmit time to TCs or flows. Some TCs or flows may be high or low priority, in which case they may be able to consume all or none of the time slices if there is sufficient available traffic. Otherwise, an administrator may configure the fraction of total slices available to each TC or flow. For an example TDM scheme to use, see IEEE 802.1Qaz "Enhanced Transmission Selection for Bandwidth Sharing Between Traffic Classes."

Egress scheduler 104 may also choose to allocate time slices on a fine or coarse granularity. A coarse granularity can be easier to implement as there is more time between each scheduling decision. Fine granularity can respond to bursts of traffic faster that coarse granularity.

Egress scheduler 104 may also choose to switch TCs or flows only on a packet boundary to simplify the design. Interleaving packets may provide benefits in some designs, but this may lead to underrun if care is not taken to ensure that requests to fabric 150 for one packet are not slowed down by requests for another packet.

Reorder buffer (ROB) allocator 106 manages the available space in a ROB 114 and/or 118 and decides a landing slot in a ROB for each fetched packet segment. ROB allocator 106 can issue a fetch command, also referred to as the read request flit (shown as rreq) sent to fabric 150. ROB allocator 106 can encode an ID for a read request flit sent to fabric 150 (the read request flit ID is shown as rreq-id). ROB decoder 112 receives the fetch response, also referred to as the read response flit (shown as rrsp), alongside the response ID (shown as rrsp-id) from the fabric 150, and steers the response flit into the target ROB, i.e. B-ROB 114 or H-ROB 118. A ROB 114 and/or 118 can receive packet segments out-of-order because of unpredictable latencies in fabric 150. ROB 114 and/or 118 can reorder packet segments based on the landing slot encoded in the ID for the read response flit received from fabric 150. If a packet header has fully arrived in H-ROB 114, processing can commence on the packet header in an attempt to hide latency of fabric 150 related to arrival of the remaining packet body segments.

ROB allocator 106 will only generate a fetch command (read request flit) if it has credits available for the landing slot in the target ROB (i.e. this prevents overflow of the ROBs). Thus, every issued flit consumes one ROB credit. For each packet segment pulled out of a ROB (i.e. towards TX control block in the B-ROB case, or towards packet (header) processing block in the H-ROB case), a credit is returned to ROB allocator 106 for the corresponding ROB (either H-ROB or B-ROB).

Description refers next to examples of packet queueing and transmit (TX) pipeline 110. In some embodiments, there are two separate ROBs, namely, a packet header-ROB (H-ROB) 114 and a packet body-ROB (B-ROB) 118. Header reorder buffer (H-ROB) 114 can be a buffer for receiving segments of a packet corresponding to its header. H-ROB 114 can be used to reorder header segments of a packet for transmission in correct order. Body reorder buffer (B-ROB) 118 can be a buffer for receiving segments of a packet corresponding to its body. B-ROB 118 can be used to reorder packet body segments for transmission in correct order. The ROBs can be implemented sharing the same underlying cache, memory, persistent memory, or storage.

H-ROB 114 can allow transmit ready headers to be pulled ahead-of-time from H-ROB for early header processing before the jitter threshold (JT) is complied with for associated packet body segments in B-ROB 118. For large packets, on average, the packet processing latency can be hidden by use of the JT check latency (e.g., while enough packet body segments are buffered to prevent underrun).

In some examples, JT enforcement applies to a packet body in B-ROB 118 whereas H-ROB 114 uses header (Hdr) check 116, so that only complete headers can be pulled out of H-ROB 114 for processing. Header (Hdr) check block 116 can permit egressing of a header when or after all segment(s) of a header are received in H-ROB 114. A header can be multiple segments and Hdr check block 116 can enforce receiving a full header before commencing header transmission or processing.

In some embodiments, a single H-ROB and single B-ROB can be used as an egress output queue shared by all flows and TCs. In some embodiments, ROB depth (e.g., amount of packet segment entries available in the ROB) can be bounded by two different criteria. The shared output data queue size can be lower bounded at a "sustained rate guarantee bound" by the maximum jitter from the fabric 150, i.e. it must be large enough to store, at least, enough packet segments to cover the target maximum response latency of the fabric 150 when sustaining segment egressing at line rate. The shared output data queue size can be upper bounded at a "drainable guarantee bound" by the minimum supported flow control pause reaction time, i.e. upon receiving a pause indication for a TC or flow, all inflight packets must be drained out of the egress pipeline before a pause reaction time expires and for each of these inflight packets, the first packet segment must be egressed through the output port before the deadline expires.

JT check block 122 can set to a threshold amount of a packet that B-ROB 118 is to store prior to allowing the packet to be pulled from B-ROB 118. For example, JT level can be based on: head-of-packet buffered segments, timer based, or a combination thereof. JT can be set for a total amount of packet, including header and body flits. However, when a header has a fixed size, JT is measured as including header and body is equivalent to the size of a header plus JT measured as including only body flits.

In some embodiments, JT check block 122 does not permit egress of a packet body from B-ROB 118 until some time and/or size threshold of portion/segments of packet is received in B-ROB 118. JT check block 122 can be used to prevent underrun (truncation) of egressed packets. For a jumbo frame, content in the B-ROB 118 can hit a size threshold and egress of the packet is allowed. If a full packet is received before time threshold met, JT check block 122 can permit egressing of the packet. If the full packet size is smaller than the size threshold, as soon as the full packet is received, JT check block 122 can permit egressing of the packet.

In some embodiments, a single output data ROB (e.g., ROBs 114 and 118) can be instantiated or provided per output (egress) port. In some examples, a ROB can be shared across multiple or all flows or TCs. The ROB can have a limited depth (e.g., ≤ maximum transmit unit (MTU) size + fabric's target maximum roundtrip latency). A depth limit (MTU size + fabric's worst case RTT) can be used because it can already sustain egress port rate while performing store-and-forward for each and every packet, thus there is no need to add further buffering. Jitter threshold (JT) check 122 can provide a jitter threshold enforcing system to B-ROB (body reorder buffer) to enforce the selected criteria (e.g., a number of head-of-packet segments that must be buffered in the B-ROB, expiration of a timer triggered at the time of reception of the first packet segment into the B-ROB, or a mixture of both criteria, as a pre-requisite to allow such packet to begin egress) in order to cover for a fabric's target maximum latency or fabric's target maximum jitter. A fabric's target maximum latency or fabric's target maximum jitter can refer to outlier latencies suffered by mid-packet segments after the packet started egressing (to prevent underrun up to a target probability). JT check 122 can enforce buffering based on one or more of the following criteria: (1) head-of-packet segments received exceeding a threshold and/or (2) based on timers (e.g., JT is met at expiration of a timer that starts at a time of reception of the first packet segment (e.g., first header segment) into the ROB)).

In some embodiments, a ROB operates in virtual cut-through (VCT)-mode when the configured JT is smaller than the MTU for the port. In some embodiments, the ROB operates in store and forward (SAF)-mode when the configured JT is equal or larger than the MTU for the port.

When fabric 150 overspeed is available for use with regard to line rate (e.g., egress rate to a medium from an egress port), the overspeed can be used to fetch the JT amount of packet thereby reducing the exposed latency for some packets. The remainder of the packet (above the JT level) can be fetched at-speed without any impact on the observable packet latency.

Packet (header) processing block 124 can process or modify packet headers, by retrieving the packet header segments from H-ROB 114 whenever the header check 116 has been complied with. Packet (header) processing block 124 can operate on a fixed header size. If the header of a specific packet is smaller than the size supported by the header processor, the header processor simply ignores the excess bytes. If the header of a specific packet is larger than the size supported by the header processor (due to excessive encapsulation), the header processor will only be able to operate on the first bytes (up to the supported size). Some embodiments allow a second pass through the packet (header) processing block 124 to handle excessively encapsulated headers or other reasons.

Packet processing block 124 can perform one or more of: egress-access control list (ACL) checking, encapsulation, de-encapsulation, in-band telemetry data insertion, and so forth. Packet processing block 124 can provide a modified header to Tx control block.

Transmit (Tx) control block 126 receives or pulls packet body segments and header segments from respective B-ROB 118 and packet processing block 124. Provided a header is available from packet processing block 124, Tx control block 126 can receive or pull all modified header segments from packet processing block 124 before the body segment(s) associated with the same packet are available for egress (i.e. before the JT has been complied with). Tx control block 126 can receive or pull body segment(s) from B-ROB 118 if a jitter threshold is met for the B-ROB 118 by JT check block 122. In some embodiments, Tx control block 126 does not initiate egressing a packet through the port until the JT for the associated body has been met.

Egress ports (not depicted) can provide packets to a network medium compliant with any standard, including Ethernet, transmission control protocol (TCP), User Datagram Protocol (UDP), FibreChannel, InfiniBand, OmniPath, Intel QuickPath Interconnect (QPI), Intel Ultra Path Interconnect (UPI), Intel On-Chip System Fabric (IOSF), InfiniBand, Compute Express Link (CXL), HyperTransport, high-speed fabric, PCIe, NVLink, Advanced Microcontroller Bus Architecture (AMBA) interconnect, OpenCAPI, Gen-Z, CCIX, NVMe over Fabrics (NVMe-oF) (described at least in NVM Express Base Specification Revision 1.4 (2019)), and variations thereof, and so forth.

Description next turns to examples of flow control. Tx control block 126 is in communication with one or more egress ports. If an egress port receives flow control, Tx control block 126 forwards flow control information to egress scheduler 104. Flow control can include a credit-based (e.g., originated from a single hop, originated across multiple hops), XON/XOFF, and so forth. Based on flow control information, egress scheduler 104 can pause transmit requests (i.e. stop fetching new packets associated with the paused TC or flow, from the switch fabric) but packets with header and body in respective H-ROB 114 and B-ROB 118 are permitted to be transmitted from an egress port. In reaction to an Xoff flow control, TX control 126 informs egress scheduler 104 to not schedule any more packets (to be fetched) for transmission for the paused TC. All the already in-flight packets before the Xoff reaction deadline expires are drained from the ROB by egress. The drain guarantee can come from the drainable guarantee bound. In other words, the "pause-point" for the egress port is implemented on the egress scheduler.

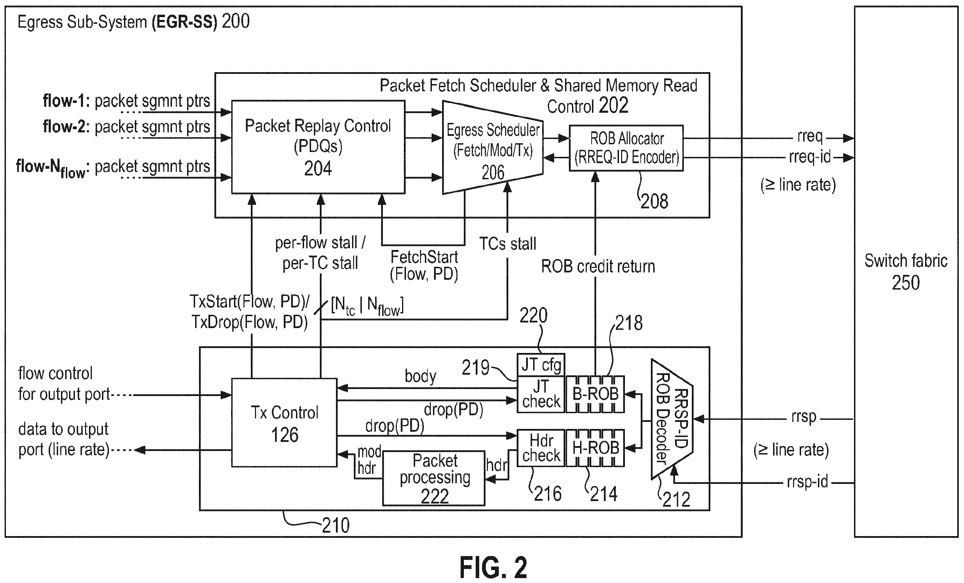

A ROB sized to exactly match the "sustained rate guarantee bound" is, by definition, the minimal buffer size that can be used alongside the corresponding fabric 150 and sustain line rate. Furthermore, as long as the "drainable guarantee bound" is larger than the "sustained rate guarantee bound," the minimal buffer sized ROB will be drainable, therefore flow control will be supported with non-blocking guarantees across TCs (or flows). Note that, if MTU is larger than the drainable guarantee bound, this system will not support store-and-forward operation (only cut-through operation is supported), as supporting store-and-forward would require growing the output data queue depth and potentially causing blocking due to flow control (e.g., Xoff). Moreover, note that if the sustained rate guarantee bound becomes higher than the drainable guarantee bound (i.e. fabric 150 has a poor latency profile), there is a contradiction and the proposed architecture would again be prone to blocking in the Xoff flow control case. One or both concerns are at least partially addressed by the system of FIG. 2.

Various embodiments support store and forward (SAF) operation and support for large latencies of fabric 150, while still relying on a single shared output data queue per egress port. An output buffer depth can grow to be equal to or larger than a sum of (MTU and fabric maximum latency target) in order to support full output port bandwidth utilization in SAF mode.

FIG. 2 shows an egress sub-system (EGR-SS) 200. Egress subsystem 200 can be used for a single output port or can be scaled to multiple ports or even multi-configuration port tiles (e.g. 1x400GE, 2x200GE, 4x100GE). Egress subsystem 200 can overcome blocking scenarios, namely, blocking caused by support for store-and-forward, or blocking caused by support for switch fabric 250 with poor latency profile characteristics. Egress subsystem 200 can be coupled to receive packets segments from switch fabric 250 and provide packets for egress from one or more egress ports.

In some embodiments, packet segment pointers (or handles) arrive at packet fetch scheduler and shared memory read control 202 from a tag ring (not shown) that delivers tags from an ingress system to egress system 200. In other cases, the pointers are stored in switch fabric 250 and are fetched similar to fetching of a payload. In the latter case, latency through switch fabric 250 is higher because packets cannot be fetched until the pointers have been fetched.

Egress scheduler 206 decides an order in which packets from switch fabric 250 are egressed from an egress port by scheduling all of the packet segments to be fetched using segment pointers from switch fabric 250. Egress scheduler 206 decides how to time division multiplex (TDM) transmissions from output data queue (e.g., H-ROB 214 and B-ROB 218) across one or more flows. Packet segments can be egressed through a packet queuing and transmit pipeline 210.

In some embodiments, ROB allocator 208, JT check 219, header check 216, egress scheduler 206, ROB decoder 212, packet processing 222, and Tx control 224 can be implemented in a similar manner and perform at least the same operations as respective ROB allocator 106, JT check 122, header check 116, egress scheduler 104, ROB decoder 112, packet processing 124, and Tx control 126 of the system of FIG. 1.

ROB allocator 208 manages the shared output data queue buffer (H-ROB 214 and B-ROB 218) space, and only fetches packets segments from switch fabric 250 if there is available space for it in the corresponding ROB. ROB allocator 208 allocates a landing slot on the shared output data queue (H-ROB 214 and B-ROB 218) for the scheduled packet segments, encodes such information (body/header indication, and correct landing slot on the corresponding ROB) into the ID for the read-request flit, rreq-id, and forwards the encoded rreq flit to switch fabric 250.

Requests and responses to and from switch fabric 250 can experience variable-latency so that switch fabric 250 can respond to requests for packets out-of-order. The read-response flits (rrsp) returned from switch fabric 250 (e.g., flits carrying the packet segment requested by the request flit) are delivered to the packet queuing and Tx pipeline (PQTP) 210. The information encoded on rrsp flit is decoded to select the correct ROB and landing slot within the ROB for the packet segment. Steering of the received read response flit to either H-ROB or B-ROB is performed by the ROB decoder 212, forwarding to the destination ROB both the packet segment carried by the flit, as well as the read response ID, which will be used by the ROBs to perform the reordering.

There can be unpredictable latency to receive packet segments from switch fabric 250, over several cycles, thus H-ROB 214 and B-ROB 218 receives packet segments out-of-order. H-ROB 214 and B-ROB 218 can reorder packet segments (e.g., header and body) based on the landing slot encoded in the ID for the read response flit received from switch fabric 250, namely, rrsp-id. If the packet header has fully arrived in H-ROB 214, processing of a packet header can start using packet processing 222 in an attempt to hide the latency of switch fabric 250 for the arrival of the remaining packet body segments to B-ROB 218.

Referring again to packet fetch scheduler and shared memory read control 202, packet replay control (PRC) block 204 can track the state of each requested packet segment as it traverses switch fabric 250 and packet queuing and Tx pipeline (PQTP) 210. For each packet in the pipeline, PRC block 204 creates a Packet Descriptor (PD) tracking its state. Some possible packet states are in the table below, however more or fewer packet states are possible.

| Packet State | Example description |
|---|---|
| Waiting | The packet is waiting to be scheduled for |
| | egress (packet fetching has not started) |
| In-Flight | In-Flight can represent a packet has been scheduled for egress and its fetching process has started, but packet has not started transmission yet. |
| Transmit (TX) | Transmit (TX) can represent that a packet has started transmission (at least its first segment has been transmitted to the port/wire), and thus the full packet is committed to the port/wire. |

PRC 204 manages multiple Packet Descriptor Queues (PDQs). In some embodiments, a PDQ can be allocated per TC(s) or flow(s) and per packet request state (e.g., waiting, in-flight, transmit, null). However, PDQ can be allocated per packet state for one or more TCs or flows. In some examples, one PDQ is instantiated per each possible combination of packet states and TCs. PRC 204 handles the transition of PDs between the PDQs associated with the TC (or flow) the packet belongs to, as the packet progresses through the egress pipeline (e.g., from waiting, to in-flight, and to transmit).

For each packet requested for fetching and egress in the egress sub-system, PRC block 204 handles the transition of its corresponding PD between PD Queues (PDQs), as the packet progresses through the pipeline. For each packet in the egress pipeline, PRC block 204 maps the PD to the list of packet segment pointers (or packet segment handles, in other switch fabric topologies) that are associated with the packet. Furthermore, PRC 204 manages the packet segment pointers for all flows or TCs, meaning that PRC 204 knows when a specific packet segment pointer can be deallocated. In some examples, only PRC 204 knows when a specific packet segment pointer can be deallocated.

Egress scheduler 206 can notify PRC 204 which PDs have been scheduled for egress (initiated fetching from switch fabric 250), in order to trigger the PD transition from Waiting state to In-Flight state, i.e. the transition of the PD from a Waiting PDQ associated with its TC (or flow) to the In-Flight PDQ associated with its TC (or flow). TX control block 224 can notify PRC 204 which PDs have initiated transmission, in order to trigger the transition to TX state.

The following describes an example response to receipt of flow control messages. For example, when egress system 200 receives a flow control message to reduce transmit rate or pause transmission of a flow or TC, egress system 200 does not start sending any new packets for that flow or TC after a pause reaction time has expired. The pause reaction time creates an upper bound on the number of packets which can be transmitted after flow control message is received. If the pause reaction time is very small, the number of packets that egress to transmission between receiving flow control message and the pause reaction time expiration is also small. Conversely, if the pause reaction time is very large, the number of packets that egress to transmission can between receiving flow control message and the pause reaction time expiration can be large.

If the number of packets that fit into a ROB is smaller than the number of packets which can be transmitted after a flow control message is received, every in-flight packet will always be able to be transmitted. When a flow control message is received, egress scheduler 206 will stop scheduling for egressing of new packets associated with the TCs (or flows) affected by the flow control message and any packets that are in-flight will be transmitted, and in-flight packets will not transition back to the waiting state and will not be replayed.

A ROB can be at least large enough to egress at line rate given latency of switch fabric 250 but small enough so the entire contents of the ROB can be transmitted after a flow control message is received. In this case, packet replay controller 204 and drop capability in ROBs are not used or included, thereby saving power, area, and design effort. However, in some cases, a lower bound imposed by latency of switch fabric 250 and the line rate is higher than the upper bound implied by the pause reaction time. Packet replay controller 204 can be used to handle cases where the pause reaction time expires but the ROB still contains packets for the paused TC or flow.

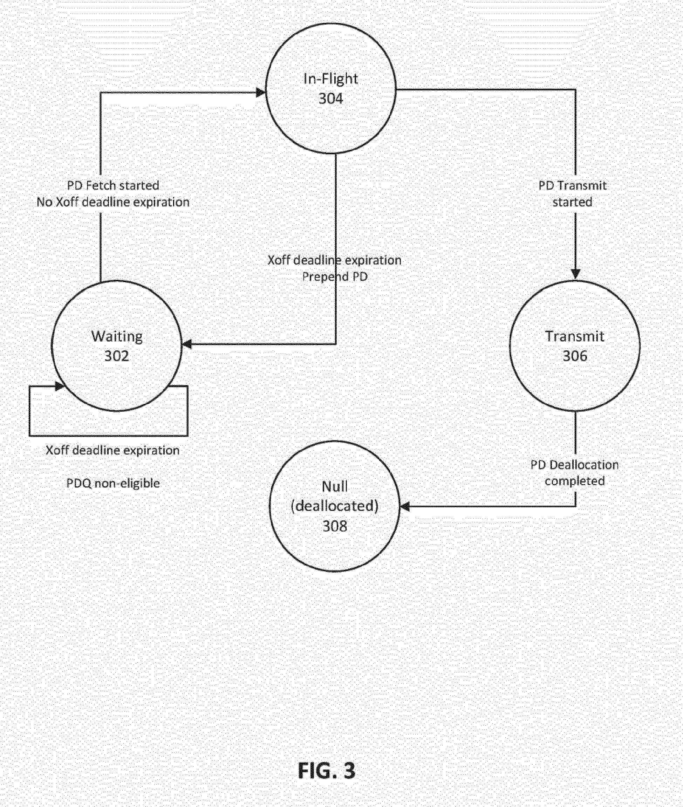

FIG. 3 depicts an example packet descriptor state transitions implemented by packet replay control (PRC) block 204. PRC block 204 uses an internal ID for packet descriptors (PD). A PD transitions from Waiting state 302 to In-Flight state 304 when its first segment (packet segment switch fabric pointer) is scheduled for egress (i.e., packet segment fetching starts) and the flow control pause deadline has not expired or there is no pause for the associated TC. A PD transitions from In-Flight state 304 to transmit (TX) state 306 when its first segment is delivered to the output port (i.e., transmission starts) and the flow control pause deadline has not expired or there is no pause for the associated TC. When a PD transitions to Transmit state 306, the associated packet is committed to the wire for transmission, and PRC 204 can deallocate from switch fabric 250 each transmitted segment for the associated PD. After a full packet has been deallocated, the PD will be removed from a PDQ (e.g., PD transitions to Null state 308).

In some embodiments, a PD transitions from in-flight 304 to waiting 302 if flow control pause deadline has expired and the PD is prepended on the corresponding PDQ for waiting state 302 and the PD will be given special treatment. A PD will remain in Waiting state 302 after a flow control pause deadline has expired, and until the flow control pause has concluded (e.g., an Xon signal is received). After the pause concludes, PRC 204 will replay all the PDs that were prepended into the Waiting state PDQ, exactly in the same order they were originally presented to egress scheduler 206 before the pause.

Referring again to FIG. 2, EGR-SS 200 supports Xon/Xoff type of flow control (e.g., 802.3x Priority-based Flow Control (PFC) on Ethernet networks) and proprietary flow controls that can be applied on a per flow basis (as opposed to per TC basis). The Xon/Xoff signaling may be on a per-TC basis and is limited to a number of configured Traffic Classes (TC), e.g. 8 TCs for PFC on Ethernet networks. When a small number of TCs is supported by the flow control protocol, then flows may be mapped to the available TCs. The Xon/Xoff type of flow control can also be derived from control packets that may be specifically carrying flow-id towards a network addressable flow control point. As an example, Link Layer Discovery Protocol (LLDP) packets with targeted destination media access control (MAC) address and payload pointing to a specified flow control action and targeted flow-id.

In EGR-SS 200, the "pause point" in response to Xon/Xoff signaling can be implemented on Egress Scheduler 206 so that no more packets will be scheduled for the flows mapped to the paused TC. Packets scheduled for egress before the Xoff was received are flushed out of the shared output data queue (ROB) and egressed through an egress port before the pause reaction time expires (e.g., for PFC on a 400GE link, the pause reaction time is under 700ns, relaxed timing for control packet derived pause signaling).

Note that for some embodiments of the system of FIG. 1, the maximum latency through the egress pipeline (including receiving the PFC indication through the fetch scheduler, allocator, switch fabric, packet processor and TX control) must be shorter than the pause reaction time. But for some embodiments of the system of FIG. 2, packets can be replayed whenever they are still in the pipeline when the pause reaction time expires.

With respect to packet transmit pauses and flow control, PRC 204 responds to an Xoff reaction deadline expiration as follows. Packet segments corresponding to PDs in the PDQ corresponding to the paused TC or flow in TX state will continue to transmission (all segments are allowed to egress to the line). But packet segments corresponding to PDs on the PDQ corresponding to the paused TC or flow in Waiting state are non-eligible for scheduling. All packet segments corresponding to PDs in the PDQ corresponding to the paused TC or flow in In-Flight state, which have not been deallocated by PRC, are pre-pended in the sequence of packet segment pointers presented to egress scheduler 206 for the corresponding TC or flow, while the associated PDs are pre-pended on the PDQ for the paused TC or flow in Waiting state. In some embodiments, later on (after Xon), the scheduling for these packets will be replayed so that the scheduling for these packets occurs again. These packets will be replayed so that they go through all the steps associated with the In-Flight state a second time. In some examples, packets that are replayed go to the head of queue at egress scheduler 206.

To support the "replay" capabilities, various logic in EGR-SS 200 are configured. Egress scheduler 206 will notify PRC 204 which PDs have been scheduled for egress (initiated fetching), in order to trigger the transition to In-Flight state. The shared output data queues include the capability to drop packet segments as requested by TX controller 224, which in turn tracks the pause reaction deadline. Packet segments corresponding to the packets that are in In-Flight state when the Xoff reaction deadline expired will be dropped, relying on the replay mechanism to re-scheduler those packets after Xon. TX Controller 224 will notify PRC 204 which PDs have initiated transmission, in order to trigger the transition from In-Flight to TX state. This interaction is depicted in FIG. 2 as the "TxStart(Flow,PD)" interface. Note, TX controller 224 may also notify PRC 204 either when all the packet segments associated with a PD have been transmitted, or it may independently notify PRC 204 of each packet segment that is transmitted (note this is not depicted in FIG.2, but could be interpreted as being part of the "TxStart(Flow,PD)" interface).

TX Controller 224 will also notify PRC 204 which PDs have been dropped, when head-of-line packet corresponds to a paused TC for which the pause reaction time has expired, in order to trigger the transition from In-Flight to Waiting state (with the associated pre-pending). This interaction is depicted in FIG.2 as the "TxDrop(Flow,PD)" interface.

PQTP 210 uses a shared output data queue (H-ROB 214 and B-ROB 218), shared by packets on all flows and TCs. Shared output data queue includes a packet header segment reorder buffer 214 and a packet body segment reorder buffer 218. The split ROB architecture can enable packet header segments to be forwarded to packet processor 222 (which may, for example, modify headers) ahead of time thus cutting down latencies.

H-ROB 214 and B-ROB 218 include the capability to drop packet segments by request from TX control block 224 via drop(PD) signals. For example, packet segments corresponding to the packets that where in an In-Flight state when the Xoff reaction deadline expired will be dropped, relying on the replay mechanism in egress scheduler 206 to reschedule those packets after Xon or a transmit pause is halted.

PRC block 204 can control a size of ROB (e.g., H-ROB 214 and B-ROB 218). If switch fabric 250 is slow and exhibits high latency or store-and-forward (SAF) operations are requested, PRC block 204 can grow the ROB size to a maximum permitted size. During runtime, when SAF is not used, PRC block 204 can shrink the size of the ROB.

Hdr check 216 can permit egressing of a header when or after all segment(s) of a header are received in an H-ROB. JT check 219 can ensure that once a large enough portion of the packet is queued in ROB before proceeding to egress using Tx control 224 through an output port. Excluding replayed packets, Tx control 224 egress packets through an output port in the exact order they were scheduled by egress scheduler 206. Even if small packets land on the shared output queue out of order, scheduled egress order is enforced.

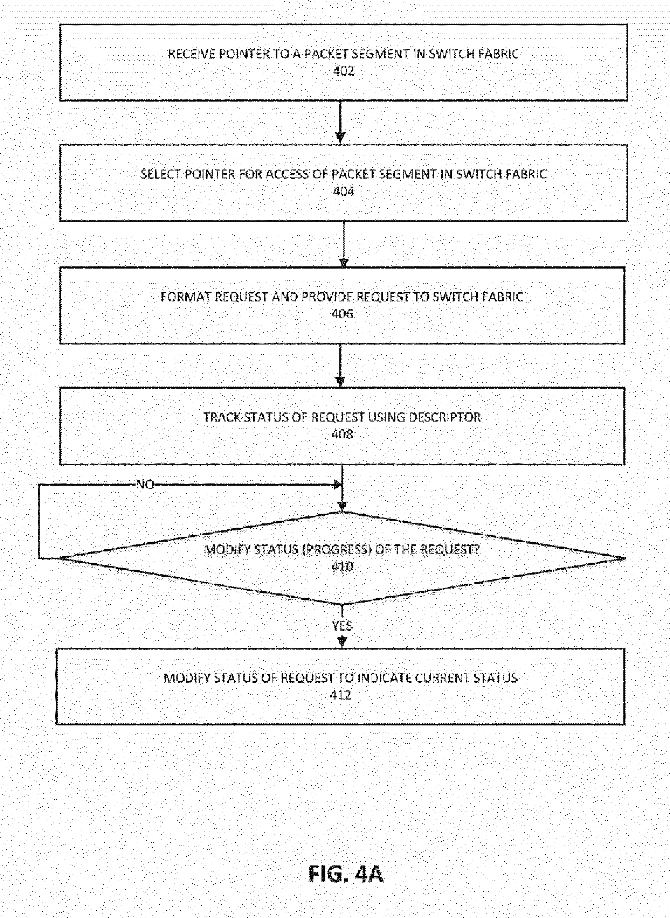

FIG. 4A depicts a process to monitor status of requests provided to a switch fabric. The process can be performed by an egress subsystem for scheduling transmission of packets received at a switch fabric. At 402, the process receives a pointer to a packet segment in a switch fabric. For example, the switch fabric can be an SMSF or any fabric that experiences variable-latency so that responses to requests for packets can occur out of order.

At 404, the process selects a pointer for switch fabric access from among one or more pointers. Selection of a pointer and access can be made according to any selection schemes such as round robin, weighted round robin, first-in-first-out, and other schemes. Flits that share a source and traffic class (TC) are to be egressed in the order they arrived. Therefore, the process (e.g., egress scheduler) can choose to schedule packet segment requests to the switch fabric in the same order as that in which they are received by the egress scheduler. A decision is made which source/TC queue to schedule egress from. The selection scheme used is configurable and is generally chosen to be a synthesis of basic arbitration schemes. For example, the system may be configured to select a TC using deficit weighted round robin and then choose the source (e.g., only considering the queues which correspond to the chosen TC) based on a FIFO scheme.

At 406, the process formats a request and provides the request to the switch fabric. For example, a request identifier is associated with the request. At 408, the process tracks a status of the request using a descriptor. The status of the request can indicate a progress of the request and can be among In-Flight, Transmit, Waiting, or Null. At 410, the process determines whether to modify a status of the request. For example, a status of the request can be modified based on receipt of a flow control message to reduce or pause a rate of packet egress. The status of the request can be modified based on commencement or completion of egress of the packet from a port. If the status of the request is to be modified, then 412 follows and the status is modified. If the status of the request is not to be modified, 410 can repeat.

At 412, the status of the request is modified to reflect its current status based on various circumstances. For example, a current status transitions from Waiting to In-Flight when its first segment (e.g., packet pointer) is scheduled for egress (i.e., fetching starts) and a flow control pause deadline has not expired. A status transitions from In-Flight to transmit (TX) when its first segment is delivered to the output port (i.e., transmission starts). When a status transitions to TX state, it is committed to the wire, and every transmitted segment can be deallocated from the switch fabric. Only after the full packet has been deallocated, a packet descriptor (PD) will be removed from a PDQ and placed in a Null state. A status transitions from In-Flight to Waiting if a flow control pause deadline has expired or the request is prepended for reasons described with respect to flow control.

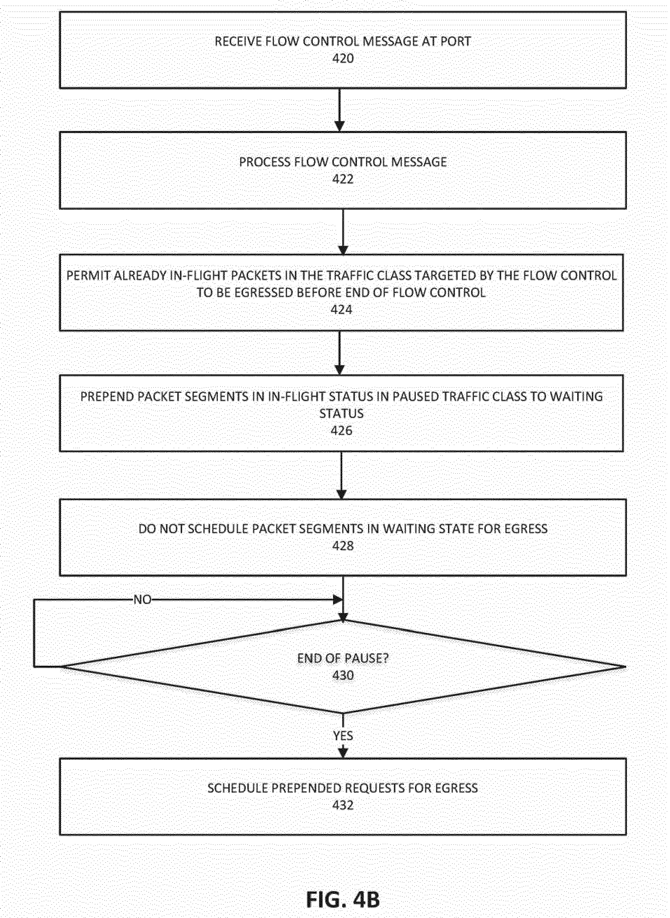

FIG. 4B depicts a process that can be used to handle flow control. The process can be performed by an egress subsystem that receives packets from a switch fabric and schedules transmission of packets for egress from a port. At 420, the process detects a flow control message is received at a port. The flow control message can be an Xoff or an Ethernet pause frame, among other messages. At 422, the process processes the flow control message. The flow control message can refer to a flow or traffic class. Processing of the flow control message triggers stoppage of scheduling any more packet fetching for transmission for the paused traffic class.

At 424, the process permits the already in-flight packets in the traffic class targeted by the flow control to be egressed from the egress queue before the end of the flow control. The end of the flow control can be Xoff reaction deadline expiration. Packet segments corresponding to packet descriptors in the packet descriptor queue corresponding to the paused TC in TX state will continue to transmission (i.e., all segments are allowed to egress).

At 426, the process prepends packet segments in the paused traffic class that are in In-Flight state to the Waiting state. Later on (after Xon is received or pause expires), the scheduling for these packets can be replayed so that the scheduling for these packets is requested again. In some examples, requests for packets that are requested again are allocated at the head of queue at the egress scheduler. At 428, the process does not schedule packet segments in Waiting state for egress.

At 430, the process makes a determination if the end of pause is reached. For example, receipt of an Xon or end of pause duration can trigger a determination that the end of pause is reached. If the end of pause is reached, then 432 follows. If the end of pause is not reached, then 430 repeats.

At 432, requests for packets that were prepended are requested again at the head of queue. Fetching of the requested packet segments from the switch fabric can resume for the paused traffic class.

Note that examples of the process of FIG. 4B are described with respect to traffic classes, but can apply to flows or other designations of packet groupings.

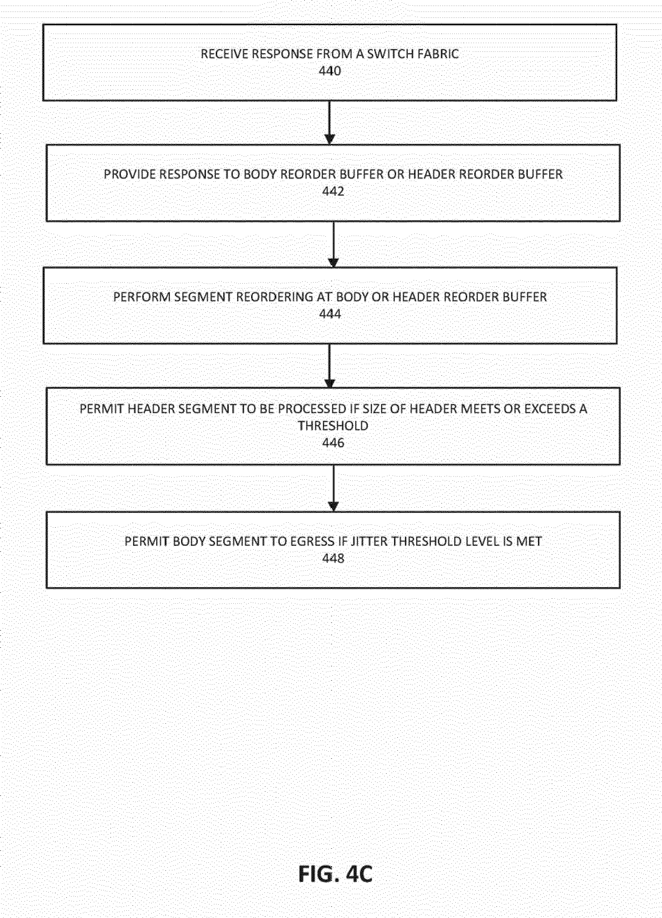

FIG. 4C depicts a process to egress a packet. The process of FIG. 4C can be performed by an egress subsystem that is to egress packets from a switch fabric to a port. At 440, the process receives a response from a switch fabric. The response can be provided by a switch fabric in response to a request for a packet segment. For example, the process can use a decoder to receive the response with response identifier and determine which packet and request the response is associated with.

At 442, the process provides a response to a body reorder buffer or header reorder buffer for storage. Body and header reorder buffers can refer to packet body and header segments that are stored in memory.

At 444, the process can perform segment reordering in the body reorder buffer or header reorder buffer to properly order the segments that may have been received out-of-order. For example, H-ROB can reorder any packet header segments that may have been received out of order. For example, B-ROB can reorder packet body segments that may have been received out of order. The process can use a decoder to process a read-response flits (rrsp) and corresponding identifier (rrsp-id) to determine a packet associated with a segment and determine an order of segments within a packet.

At 446, the process permits packet header segment(s) to be processed if a size of a header for a packet available in the header buffer (e.g., H-ROB) meets a threshold level. The processed header can be provided to an egress port for egress prior to egress of an associated body. Processing of a header can include egress-access control list (ACL) checking, encapsulation, de-encapsulation, in-band telemetry data insertion, and so forth.

At 448, the process permits packet body segment(s) associated with the processed header to egress to an output queue if a jitter threshold level is met. For example, if the processed header indicates the associated packet is permitted to egress, the associated packet body segment can be permitted to egress but subject to jitter threshold level being met. A jitter threshold can be an amount of time and/or size threshold of body segments of packet in a B-ROB before egress of a packet body from B-ROB is permitted to egress. Use of jitter threshold can potentially prevent underrun (truncation) of egressed packets. If a full packet is received before time threshold met, egressing of the packet can be permitted.

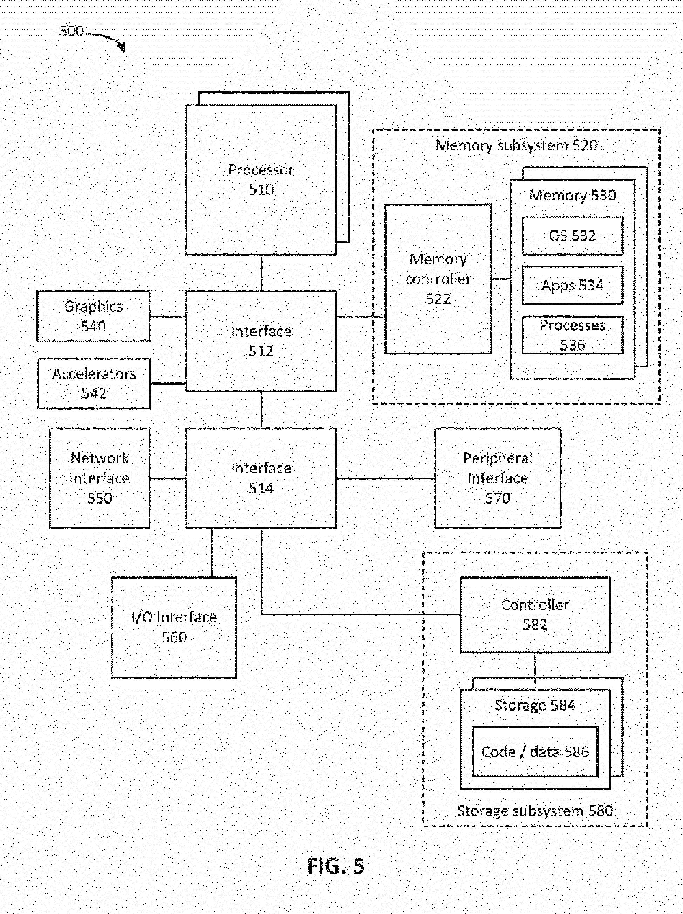

FIG. 5 depicts an example system. The system can use embodiments described herein to allocate accelerator traffic to an accelerator memory via an accelerator fabric instead of using a host-to-device fabric. System 500 includes processor 510, which provides processing, operation management, and execution of instructions for system 500. Processor 510 can include any type of microprocessor, central processing unit (CPU), graphics processing unit (GPU), processing core, or other processing hardware to provide processing for system 500, or a combination of processors. Processor 510 controls the overall operation of system 500, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 500 includes interface 512 coupled to processor 510, which can represent a higher speed interface or a high throughput interface for system components that needs higher bandwidth connections, such as memory subsystem 520 or graphics interface components 540, or accelerators 542. Interface 512 represents an interface circuit, which can be a standalone component or integrated onto a processor die. Where present, graphics interface 540 interfaces to graphics components for providing a visual display to a user of system 500. In one example, graphics interface 540 can drive a high definition (HD) display that provides an output to a user. High definition can refer to a display having a pixel density of approximately 100 PPI (pixels per inch) or greater and can include formats such as full HD (e.g., 1080p), retina displays, 4K (ultra-high definition or UHD), or others. In one example, the display can include a touchscreen display. In one example, graphics interface 540 generates a display based on data stored in memory 530 or based on operations executed by processor 510 or both. In one example, graphics interface 540 generates a display based on data stored in memory 530 or based on operations executed by processor 510 or both.

Accelerators 542 can be a fixed function offload engine that can be accessed or used by a processor 510. For example, an accelerator among accelerators 542 can provide compression (DC) capability, cryptography services such as public key encryption (PKE), cipher, hash/authentication capabilities, decryption, or other capabilities or services. In some embodiments, in addition or alternatively, an accelerator among accelerators 542 provides field select controller capabilities as described herein. In some cases, accelerators 542 can be integrated into a CPU socket (e.g., a connector to a motherboard or circuit board that includes a CPU and provides an electrical interface with the CPU). For example, accelerators 542 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 542 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models.

Memory subsystem 520 represents the main memory of system 500 and provides storage for code to be executed by processor 510, or data values to be used in executing a routine. Memory subsystem 520 can include one or more memory devices 530 such as read-only memory (ROM), flash memory, one or more varieties of random access memory (RAM) such as DRAM, or other memory devices, or a combination of such devices. Memory 530 stores and hosts, among other things, operating system (OS) 532 to provide a software platform for execution of instructions in system 500. Additionally, applications 534 can execute on the software platform of OS 532 from memory 530. Applications 534 represent programs that have their own operational logic to perform execution of one or more functions. Processes 536 represent agents or routines that provide auxiliary functions to OS 532 or one or more applications 534 or a combination. OS 532, applications 534, and processes 536 provide software logic to provide functions for system 500. In one example, memory subsystem 520 includes memory controller 522, which is a memory controller to generate and issue commands to memory 530. It will be understood that memory controller 522 could be a physical part of processor 510 or a physical part of interface 512. For example, memory controller 522 can be an integrated memory controller, integrated onto a circuit with processor 510.

While not specifically illustrated, it will be understood that system 500 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 500 includes interface 514, which can be coupled to interface 512. In one example, interface 514 represents an interface circuit, which can include standalone components and integrated circuitry. In one example, multiple user interface components or peripheral components, or both, couple to interface 514. Network interface 550 provides system 500 the ability to communicate with remote devices (e.g., servers or other computing devices) over one or more networks. Network interface 550 can include an Ethernet adapter, wireless interconnection components, cellular network interconnection components, USB (universal serial bus), or other wired or wireless standards-based or proprietary interfaces. Network interface 550 can transmit data to a device that is in the same data center or rack or a remote device, which can include sending data stored in memory. Network interface 550 can receive data from a remote device, which can include storing received data into memory. Various embodiments can be used in connection with network interface 550, processor 510, and memory subsystem 520.

In one example, system 500 includes one or more input/output (I/O) interface(s) 560. I/O interface 560 can include one or more interface components through which a user interacts with system 500 (e.g., audio, alphanumeric, tactile/touch, or other interfacing). Peripheral interface 570 can include any hardware interface not specifically mentioned above. Peripherals refer generally to devices that connect dependently to system 500. A dependent connection is one where system 500 provides the software platform or hardware platform or both on which operation executes, and with which a user interacts.

In one example, system 500 includes storage subsystem 580 to store data in a nonvolatile manner. In one example, in certain system implementations, at least certain components of storage 580 can overlap with components of memory subsystem 520. Storage subsystem 580 includes storage device(s) 584, which can be or include any conventional medium for storing large amounts of data in a nonvolatile manner, such as one or more magnetic, solid state, or optical based disks, or a combination. Storage 584 holds code or instructions and data 586 in a persistent state (i.e., the value is retained despite interruption of power to system 500). Storage 584 can be generically considered to be a "memory," although memory 530 is typically the executing or operating memory to provide instructions to processor 510. Whereas storage 584 is nonvolatile, memory 530 can include volatile memory (i.e., the value or state of the data is indeterminate if power is interrupted to system 500). In one example, storage subsystem 580 includes controller 582 to interface with storage 584. In one example controller 582 is a physical part of interface 514 or processor 510 or can include circuits or logic in both processor 510 and interface 514.

A volatile memory is memory whose state (and therefore the data stored in it) is indeterminate if power is interrupted to the device. Dynamic volatile memory requires refreshing the data stored in the device to maintain state. One example of dynamic volatile memory incudes DRAM (Dynamic Random Access Memory), or some variant such as Synchronous DRAM (SDRAM). A memory subsystem as described herein may be compatible with a number of memory technologies, such as DDR3 (Double Data Rate version 3, original release by JEDEC (Joint Electronic Device Engineering Council) on June 27, 2007). DDR4 (DDR version 4, initial specification published in September 2012 by JEDEC), DDR4E (DDR version 4), LPDDR3 (Low Power DDR version3, JESD209-3B, August 2013 by JEDEC), LPDDR4) LPDDR version 4, JESD209-4, originally published by JEDEC in August 2014), WIO2 (Wide Input/output version 2, JESD229-2 originally published by JEDEC in August 2014, HBM (High Bandwidth Memory, JESD325, originally published by JEDEC in October 2013, LPDDR5 (currently in discussion by JEDEC), HBM2 (HBM version 2), currently in discussion by JEDEC, or others or combinations of memory technologies, and technologies based on derivatives or extensions of such specifications. The JEDEC standards are available at www.jedec.org.

A non-volatile memory (NVM) device is a memory whose state is determinate even if power is interrupted to the device. In one embodiment, the NVM device can comprise a block addressable memory device, such as NAND technologies, or more specifically, multi-threshold level NAND flash memory (for example, Single-Level Cell ("SLC"), Multi-Level Cell ("MLC"), Quad-Level Cell ("QLC"), Tri-Level Cell ("TLC"), or some other NAND). A NVM device can also comprise a byte-addressable write-in-place three dimensional cross point memory device, or other byte addressable write-in-place NVM device (also referred to as persistent memory), such as single or multi-level Phase Change Memory (PCM) or phase change memory with a switch (PCMS), NVM devices that use chalcogenide phase change material (for example, chalcogenide glass), resistive memory including metal oxide base, oxygen vacancy base and Conductive Bridge Random Access Memory (CB-RAM), nanowire memory, ferroelectric random access memory (FeRAM, FRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

A power source (not depicted) provides power to the components of system 500. More specifically, power source typically interfaces to one or multiple power supplies in system 500 to provide power to the components of system 500. In one example, the power supply includes an AC to DC (alternating current to direct current) adapter to plug into a wall outlet. Such AC power can be renewable energy (e.g., solar power) power source. In one example, power source includes a DC power source, such as an external AC to DC converter. In one example, power source or power supply includes wireless charging hardware to charge via proximity to a charging field. In one example, power source can include an internal battery, alternating current supply, motion-based power supply, solar power supply, or fuel cell source.

In an example, system 500 can be implemented using interconnected compute sleds of processors, memories, storages, network interfaces, and other components. High speed interconnects can be used such as PCIe, Ethernet, or optical interconnects (or a combination thereof).

Embodiments herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, each blade includes components common to conventional servers, including a main printed circuit board (main board) providing internal wiring (i.e., buses) for coupling appropriate integrated circuits (ICs) and other components mounted to the board.

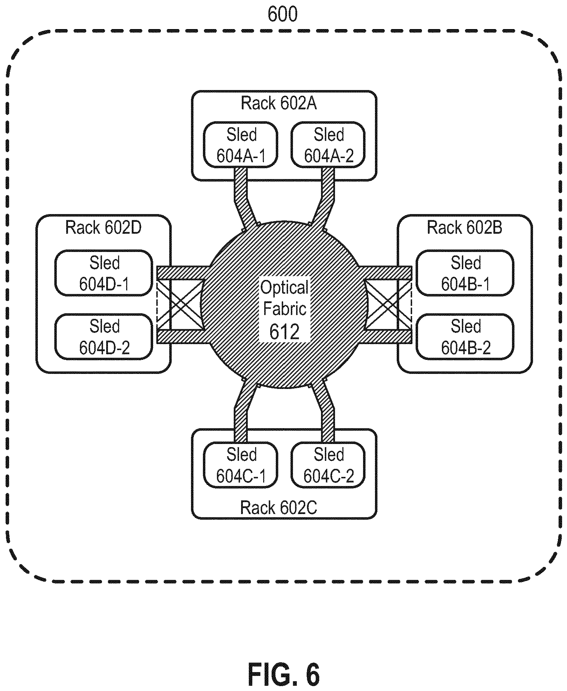

FIG. 6 depicts an example of a data center. Various embodiments can be used in or with the data center of FIG. 6. As shown in FIG. 6, data center 600 may include an optical fabric 612. Optical fabric 612 may generally include a combination of optical signaling media (such as optical cabling) and optical switching infrastructure via which any particular sled in data center 600 can send signals to (and receive signals from) the other sleds in data center 600. However, optical, wireless, and/or electrical signals can be transmitted using fabric 612. The signaling connectivity that optical fabric 612 provides to any given sled may include connectivity both to other sleds in a same rack and sleds in other racks. Data center 600 includes four racks 602A to 602D and racks 602A to 602D house respective pairs of sleds 604A-1 and 604A-2, 604B-1 and 604B-2, 604C-1 and 604C-2, and 604D-1 and 604D-2. Thus, in this example, data center 600 includes a total of eight sleds. Optical fabric 612 can provide sled signaling connectivity with one or more of the seven other sleds. For example, via optical fabric 612, sled 604A-1 in rack 602A may possess signaling connectivity with sled 604A-2 in rack 602A, as well as the six other sleds 604B-1, 604B-2, 604C-1, 604C-2, 604D-1, and 604D-2 that are distributed among the other racks 602B, 602C, and 602D of data center 600. The embodiments are not limited to this example. For example, fabric 612 can provide optical and/or electrical signaling.

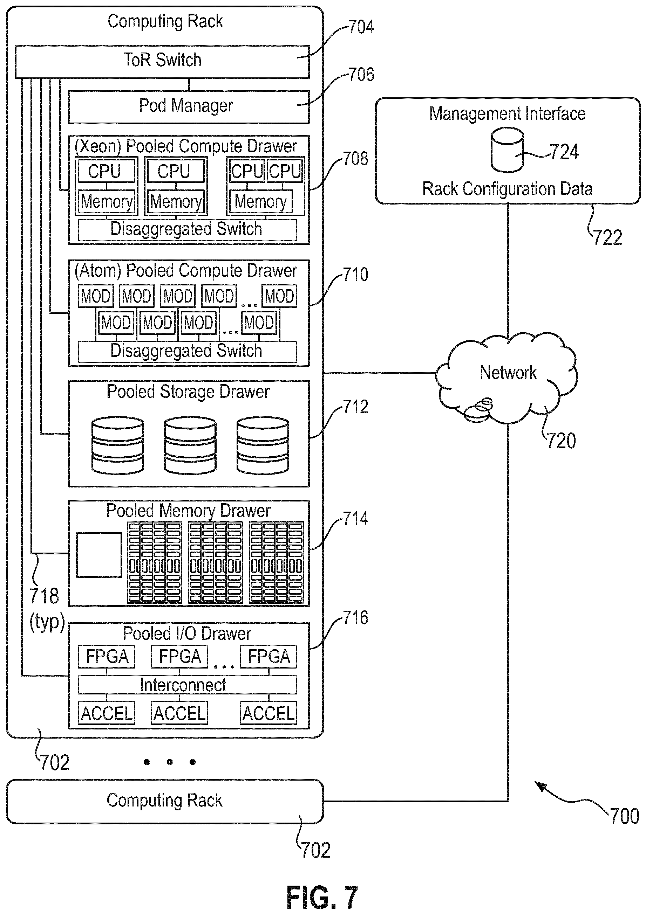

FIG. 7 depicts an environment 700 includes multiple computing racks 702, each including a Top of Rack (ToR) switch 704, a pod manager 706, and a plurality of pooled system drawers. Generally, the pooled system drawers may include pooled compute drawers and pooled storage drawers. Optionally, the pooled system drawers may also include pooled memory drawers and pooled Input/Output (I/O) drawers. In the illustrated embodiment the pooled system drawers include an INTEL® XEON® pooled computer drawer 708, and INTEL® ATOM™ pooled compute drawer 710, a pooled storage drawer 712, a pooled memory drawer 714, and a pooled I/O drawer 716. Each of the pooled system drawers is connected to ToR switch 704 via a high-speed link 718, such as a 40 Gigabit/second (Gb/s) or 100Gb/s Ethernet link or an 100+ Gb/s Silicon Photonics (SiPh) optical link. In one embodiment high-speed link 718 comprises an 800 Gb/s SiPh optical link.

Multiple of the computing racks 700 may be interconnected via their ToR switches 704 (e.g., to a pod-level switch or data center switch), as illustrated by connections to a network 720. In some embodiments, groups of computing racks 702 are managed as separate pods via pod manager(s) 706. In one embodiment, a single pod manager is used to manage all of the racks in the pod. Alternatively, distributed pod managers may be used for pod management operations.

Environment 700 further includes a management interface 722 that is used to manage various aspects of the environment. This includes managing rack configuration, with corresponding parameters stored as rack configuration data 724.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. It is noted that hardware, firmware and/or software elements may be collectively or individually referred to herein as "module," "logic," "circuit," or "circuitry." A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of steps may also be performed according to alternative embodiments. Furthermore, additional steps may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z."'

Illustrative examples of the devices, systems, and methods disclosed herein are provided below. An embodiment of the devices, systems, and methods may include any one or more, and any combination of, the examples described below.
Example 1 includes an egress port management apparatus including: a packet re-order buffer (ROB) and an egress scheduler to decide egress ordering for packets in the packet ROB, wherein based on reception of a flow control message, the egress scheduler is to pause egress of packets in a flow associated with the flow control message from an egress port by halting packet egress scheduling for packets corresponding to a flow associated with flow control from a time of reception of a flow control message until a time when flow control stops.
Example 2 includes any example and includes a transmit controller to control transmission of a packet from the ROB based on packet segment state, the transmit control to react to the flow control message by: permit segments in the flow in a transmit state to be output from the ROB, permit in-flight packet segments in the flow before a flow control reaction deadline expires to be output from the ROB, and do not schedule egress of a packet segment corresponding to a flow associated with the flow control message.
Example 3 includes any example and includes a packet replay control to track a state of a packet segment request, wherein a state comprises: packet is waiting to be scheduled for egress, packet has been scheduled for egress and its fetching has started but packet has not started transmission yet, or packet has started transmission.
Example 4 includes any example, wherein based on end of flow control, the packet replay control is to prioritize re-played requests for fetching from a switch fabric.
Example 5 includes any example, wherein: the egress scheduler is to notify the packet replay control which packet descriptors have been scheduled for egress to trigger a transition to in-flight state, the transmit controller is to notify the packet replay control which packet descriptors have had transmission initiated, in order to trigger transition to a transmit state, and the transmit controller is to notify the packet replay control that egress of a packet is complete to cause deallocation of packet segment pointers.
Example 6 includes any example, wherein: the ROB is shared across multiple flows, the ROB comprises a header-ROB (H-ROB) and a body-ROB (B-ROB), a depth of the ROB and pause of the ROB at least, in part, allow the flow to be non-blocking of another flow, the ROB is to receive an out-of-order packet segment from a switch fabric and the ROB is to reorder the segments of a packet, and a depth of the ROB is bounded to be drainable within a pause control reaction deadline in accordance with an egress port transmit rate.
Example 7 includes any example, wherein the ROB comprises a header-ROB (H-ROB) and a body-ROB (B-ROB) and comprising a jitter threshold enforcement device to apply a time or segment threshold for output from the B-ROB and header processing logic to process a header from the H-ROB and wherein the header processing logic is to retrieve a header before a jitter threshold for a body associated with the header is met.
Example 8 includes any example, wherein the ROB is to drop packet segments corresponding to packets that were in an in-flight state at expiration of a flow control reaction deadline.
Example 9 includes any example, wherein a depth of the ROB is large enough to hold, at least, enough packet segments to cover a target maximum switch response latency when egressing segments at line rate and maximum allowed pause reaction time for all in-flight packets to be egressed before the pause reaction time expires.
Example 10 includes any example, and includes a jitter-threshold (JT) checker to specify a minimum number of head-of-packet segments that must be buffered to allow a packet to commence egress.
Example 11 includes any example, wherein the JT checker is to cause the ROB to operate in virtual cut through mode when a configured jitter threshold is smaller than a maximum transmission unit for a port.
Example 12 includes any example, wherein the JT checker is to cause the ROB to operate in store and forward mode when a configured jitter threshold is equal or larger than the maximum transmission unit for an output port.
Example 13 includes any example, and includes at least one egress port coupled to the egress scheduler.
Example 14 includes any example, and includes a switch fabric coupled to the egress scheduler.
Example 15 includes any example, and includes at least one of a server, rack, blade, or data center.
Example 16 includes a method comprising: for a packet requested to be fetched from a fabric for egress from a port, storing a packet descriptor that indicates progress of a packet egress, wherein the progress indicates one or more of waiting, in-flight, or transmit; setting a progress to waiting prior to commencement of a fetch for a packet portion; updating the progress based on a change in status from waiting to in-flight based on commencement of the fetch for the packet portion; and updating the progress based on a change in status from in-flight to transmit based on commencement of a transmit of a packet portion.
Example 17 includes any example, and includes based on receipt of a flow control request for a flow: changing a state of a packet segment of the flow that is in an in-flight state when a flow control reaction deadline expires into a waiting state; permitting a packet in the flow that is in an in-flight state before a flow control reaction deadline expires to be egressed from an output queue, and not permitting scheduling of transmission of a packet in the flow that is in a waiting state.
Example 18 includes any example, and includes processing a header from a header queue by pulling headers before a jitter threshold for an associated body is complied with.
Example 19 includes any example, and includes providing a jitter threshold for body segments of packet by waiting for a minimum number of head-of-packet segments to be buffered to allow egress of a packet to start.
Example 20 includes a system comprising: a switch fabric; an ingress port to the switch fabric; and an egress system from the switch fabric, the egress system comprising an egress port and the egress system comprising: an output data re-order buffer (ROB) that is shared across multiple flows and a transmit controller to control transmission of a packet from the ROB, the transmit controller to react to a flow control request for a flow by: permit segments in the flow in a transmit state to be output from the ROB, permit in-flight packet segments in the flow before a flow control reaction deadline expires to be output from the ROB, and do not schedule egress of a packet segment in the flow that is in a waiting state.
Example 21 includes any example, wherein the switch fabric comprises a shared memory switch fabric.
Example 22 includes any example, wherein: the ROB is shared across multiple flows, the ROB comprises a header-ROB (H-ROB) and a body-ROB (B-ROB), a depth of the ROB and pause of the ROB at least, in part, allow the flow to be non-blocking of another flow, the ROB is to receive an out-of-order packet segment from a switch fabric and the ROB is to reorder the segments of a packet, and a depth of the ROB is bounded to be drainable within a pause control reaction deadline in accordance with an egress port transmit rate.
Example 23 includes any example, wherein the egress system is to: based on end of flow control, prioritize re-allocated requests for fetching from a switch fabric.

## Claims

1. An egress port management apparatus comprising:
a packet re-order buffer (ROB) and
an egress scheduler to decide egress ordering for packets in the packet ROB, wherein based on reception of a flow control message, the egress scheduler is to pause egress of packets in a flow associated with the flow control message from an egress port by halting packet egress scheduling for packets corresponding to a flow associated with flow control from a time of reception of a flow control message until a time when flow control stops.

2. The apparatus of claim 1, comprising:
a transmit controller to control transmission of a packet from the ROB based on packet segment state, the transmit control to react to the flow control message by:
permit segments in the flow in a transmit state to be output from the ROB,
permit in-flight packet segments in the flow before a flow control reaction deadline expires to be output from the ROB, and
do not schedule egress of a packet segment corresponding to a flow associated with the flow control message.

3. The apparatus of claim 1, wherein:
the ROB is shared across multiple flows,
the ROB comprises a header-ROB (H-ROB) and a body-ROB (B-ROB),
a depth of the ROB and pause of the ROB at least, in part, allow the flow to be non-blocking of another flow,
the ROB is to receive an out-of-order packet segment from a switch fabric and the ROB is to reorder the segments of a packet, and
a depth of the ROB is bounded to be drainable within a pause control reaction deadline in accordance with an egress port transmit rate.

4. The apparatus of claim 1, wherein the ROB comprises a header-ROB (H-ROB) and a body-ROB (B-ROB) and comprising a jitter threshold enforcement device to apply a time or segment threshold for output from the B-ROB and header processor to process a header from the H-ROB and wherein the header processor is to retrieve a header before a jitter threshold for a body associated with the header is met.

5. The apparatus of claim 1, comprising a jitter-threshold (JT) checker to specify a minimum number of head-of-packet segments that must be buffered to allow a packet to commence egress, wherein the JT checker is to cause the ROB to operate in virtual cut through mode when a configured jitter threshold is smaller than a maximum transmission unit for a port or cause the ROB to operate in store and forward mode when a configured jitter threshold is equal or larger than the maximum transmission unit for an output port.

6. The apparatus of claim 1, comprising a switch fabric coupled to the egress scheduler.

7. The apparatus of any of claims 1-6, comprising at least one of a server, rack, blade, or data center.

8. A method comprising:
for a packet requested to be fetched from a fabric for egress from a port, storing a packet descriptor that indicates progress of a packet egress, wherein the progress indicates one or more of waiting, in-flight, or transmit;
setting a progress to waiting prior to commencement of a fetch for a packet portion;
updating the progress based on a change in status from waiting to in-flight based on commencement of the fetch for the packet portion; and
updating the progress based on a change in status from in-flight to transmit based on commencement of a transmit of a packet portion.

9. The method of claim 8, comprising:
based on receipt of a flow control request for a flow:
changing a state of a packet segment of the flow that is in an in-flight state when a flow control reaction deadline expires into a waiting state;
permitting a packet in the flow that is in an in-flight state before a flow control reaction deadline expires to be egressed from an output queue, and
not permitting scheduling of transmission of a packet in the flow that is in a waiting state.

10. The method of claim 8, comprising:
providing a jitter threshold for body segments of packet by waiting for a minimum number of head-of-packet segments to be buffered to allow egress of a packet to start.

11. The method of any of claims 8-10, comprising:
processing a header from a header queue by pulling headers before a jitter threshold for an associated body is complied with.

12. A system comprising:
a switch fabric;
an ingress port to the switch fabric; and
an egress system from the switch fabric, the egress system comprising an egress port and the egress system comprising:
an output data re-order buffer (ROB) that is shared across multiple flows and
a transmit controller to control transmission of a packet from the ROB, the transmit controller to react to a flow control request for a flow by:
permit segments in the flow in a transmit state to be output from the ROB,
permit in-flight packet segments in the flow before a flow control reaction deadline expires to be output from the ROB, and
do not schedule egress of a packet segment in the flow that is in a waiting state.

13. The system of claim 12, wherein the switch fabric comprises a shared memory switch fabric.

14. The system of claim 12, wherein:
the ROB is shared across multiple flows,
the ROB comprises a header-ROB (H-ROB) and a body-ROB (B-ROB),
a depth of the ROB and pause of the ROB at least, in part, allow the flow to be non-blocking of another flow,
the ROB is to receive an out-of-order packet segment from a switch fabric and the ROB is to reorder the segments of a packet, and
a depth of the ROB is bounded to be drainable within a pause control reaction deadline in accordance with an egress port transmit rate.

15. The system of any of claims 13 or 14, wherein the egress system is to: based on end of flow control, prioritize re-allocated requests for fetching from a switch fabric.
